**Europäisches Patentamt**

**European Patent Office**

**Office européen des brevets**

(19)

(11) Veröffentlichungsnummer: **0 218 545
B1**

(12) **EUROPÄISCHE PATENTSCHRIFT**

(45) Veröffentlichungstag der Patentschrift:
31.10.90

(51) Int. Cl.⁵: **B01D 9/00**

(21) Anmeldenummer: 86810363.1

(22) Anmeldetag: 15.08.86

(54) Kristallisationsvorrichtung und deren Verwendung.

(30) Priorität: 09.10.85 CH 4359/85

(43) Veröffentlichungstag der Anmeldung:
15.04.87 Patentblatt 87/16

(45) Bekanntmachung des Hinweises auf die Patenterteilung:
31.10.90 Patentblatt 90/44

(84) Benannte Vertragsstaaten:
BE CH DE FR GB IT LI NL SE

(56) Entgegenhaltungen:
EP-A- 0 124 747
CH-C- 501 421
FR-A- 1 052 023
GB-A- 2 051 597
US-A- 2 874 199
US-A- 3 528 786
US-A- 3 891 394

(73) Patentinhaber: **GEBRÜDER SULZER
AKTIENGESELLSCHAFT**, Zürcherstrasse 9,
CH-8401 Winterthur(CH)

(72) Erfinder: **Jancic, Slobodan J. Dr.,**
Tachlisbrunnenstrasse 33, CH-8400 Winterthur(CH)
Erfinder: **Ehrsam, Christian, Dr.,** Obermühlestrasse 2,
Ch-8400 Winterthur(CH)

(74) Vertreter: **Riederer, Conrad A., Dr.,** Bahnhofstrasse 10,
CH-7310 Bad Ragaz(CH)

## Beschreibung

Die Erfindung betrifft eine Kristallisationsvorrichtung mit mindestens einem Rohr, das mit dem zu behandelnden Flüssigkeitsgemisch beschickbar ist, wobei sich bei der Kristallisation ein an der Rohrwandung haftendes Kristallisat bildet.

Die CH-PS 501 421 beschreibt ein Verfahren und eine Vorrichtung zur Stofftrennung aus einem flüssigen Gemisch durch fraktionierte Kristallisation. Dieses Verfahren ist als "Sulzer-MWB"-Verfahren bekannt geworden. Es besteht im wesentlichen darin, dass das flüssige Gemisch wiederholt durch eine Kristallisationsvorrichtung geführt wird, wobei die abgeschiedene Kristallschicht nach Erreichen einer bestimmten Dicke abgeschmolzen wird. Die Kristallisationsvorrichtung weist ein senkrecht angeordnetes Rohrbündel auf, bei dem das Flüssigkeitsgemisch durch die Rohre geführt wird, welche aussen von einem Wärmeübertragungsmittel umspült werden, das die für die Kristallisation notwendige Temperatur aufweist. Bei dieser Kristallisationsvorrichtung ist nachteilig, dass sich der Wärmeübergang mit dem Anwachsen der auskristallisierten Schicht an der Rohrwandung erheblich verschlechtert. Dadurch verschlechtert sich auch der Wirkungsgrad des Verfahrens. Bei gewissen Materialien bietet auch der Beginn der Kristallisation Probleme, d.h. die Auslösung der Kristallschichtbildung ist vielfach nicht reproduzierbar.

Die US-A 3 528 786 beschreibt ein Verfahren zur Kristallisation von Natriumkieselfluorid aus Verunreinigungen enthaltender Phosphorsäure. Zu diesem Zweck ist eine Kristallisiervorrichtung in Form einer leicht geneigten Rinne vorgesehen, welche mit einem wassergekühlten Mantel versehen ist. Um die Kristallisation in der Rinne zu fördern sind in dieser in Abständen von etwa fünfzehn Zentimetern Metallblechstücke vorgesehen. Diese Metallblechstücke mit dem daran haftenden Kristallisat werden in Zeitintervallen von etwa dreissig Minuten durch eine automatische Einrichtung durch neue Metallblechstücke ersetzt. Die beschriebene Kristallisationsvorrichtung ist kompliziert und eignet sich nur für ein sehr beschränktes Anwendungsgebiet.

Es ist Aufgabe der vorliegenden Erfindung, eine Kristallisationsvorrichtung der eingangs erwähnten Art zu verbessern, um die genannten Nachteile ganz oder mindestens zum Teil zu vermeiden. Insbesondere sollte eine Erhöhung des Wirkungsgrades des Kristallisationsverfahrens erzielt werden, z.B. durch Reduzierung der Anzahl der notwendigen Rohre bei gleicher Kapazität der Anlage. Auch sollte eine grosse Rohrbeladung möglich sein, und zwar auch bei Materialien, die relativ schlecht an der Rohrwandung haften. Gegenüber der Vorrichtung der US-A 3 528 786 soll eine einfache Konstruktion und eine einfache Verfahrungsführung erreicht werden.

Zur Lösung dieser Aufgabe sieht die Erfindung vor, dass mindestens eine Einbaute vorgesehen ist, welche die wirksame Oberfläche im Innern des Rohrs vergrössert, und dass die wirksame Oberfläche der Einbaute entsprechend dem zu behandelnden Flüssigkeitsgemisch in Flussrichtung zunimmt. Da die Wärmeabfuhr durch das Kühlmittel ein limitierender Faktor für die Kinetik der Kristallbildung darstellt, wird die pro Längeneinheit des Rohres erzeugte Kristallmenge durch den Einsatz von Einbauten zwar nicht wesentlich vergrössert, aber es wird eine kleinere lineare Wachstumsgeschwindigkeit an der Kristalloberfläche erhalten, und dies führt zu besseren Bedingungen für die Bildung eines reinen Kristallisats. So wird beispielsweise die Aufkonzentrierung der Verunreinigungen an der Grenzschicht der Kristalle weitgehend vermieden. Die Einbauten ermöglichen auch bei schlecht haftendem Kristallisat eine grosse Rohrbeladung. Da die Oberfläche der Einbaute in Flussrichtung zunimmt, wird unter anderem eine Erhöhung der Rohrbeladung ermöglicht.

Ein Ausführungsbeispiel der Erfindung sieht vor, dass im jeweiligen Rohr nacheinander verschiedene Abschnitte vorgesehen sind und dass in Flussrichtung gesehen, die wirksame Oberfläche pro Längeneinheit der nachfolgenden Einbaute grösser ist als jene der vorangehenden Einbaute. Dies hat den Vorteil, dass keine Überhitzung der zu kristallisierenden Masse im oberen Teil des Rohres erfolgen muss, um eine konstitutionelle Unterkühlung zu verhindern. Durch die progressive Vergrösserung der Oberfläche von Einbaute zu Einbaute wird ferner die Haftung des Kristallisats weiter verbessert, was wiederum eine Erhöhung der Rohrbeladung ermöglicht.

Zweckmässigerweise weisen die Einbauten von der Rohrwandung nach innen ragende Strukturelement auf. Diese Ausbildung hat den Vorteil, dass auch bei weitgehender Füllung des Rohrs durch Kristallisat eine Wärmeübertragung durch die gut leitenden Strukturelemente erfolgt. Dabei ist zweckmässig, wenn die Einbauten im Bereich der Rohrwandung für den Wärmeübergang ausgebildete Kontaktflächen aufweisen. Vorteilhaft sind die Einbauten mit Perforationen versehen. Diese können dem Zweck entsprechend ausgebildet sein. So verbessern Perforationen die Flüssigkeitsverteilung zu Beginn der Kristallisation und ermöglichen eine grosse Rohrbeladung. Anstelle von Perforationen oder zusätzlich von Perforationen können die Einbauten auch eine Oberflächenstrukturierung, z.B. eine Riffelung aufweisen. Auch dies bringt ähnliche Vorteile wie die Perforationen. Die Einbauten können aus Metallblech bestehen. Eine solche Ausbildung ist besonders kostengünstig in der Herstellung. Eine besonders einfache Art von Einbauten besteht aus einem mehrfach gefalteten Metallblech. Dadurch entsteht im Schnitt z.B. eine sternförmige Anordnung. Dies hat den Vorteil, dass im Bereich der Rohrwandung eine Kapillarwirkung in den Falten entsteht. Dadurch wird die Fliessgeschwindigkeit des Flüssigkeitsgemisches verlangsamt, so dass es sich lokal stärker abkühlt und dadurch die Auslösung des Kristallisationsvorgangs erleichtert. Wenn korrosive Flüssigkeitsgemische behandelt werden müssen, können auch Einbauten aus Kunststoff, z.B. Polyvinylchlorid oder aus Graphit verwendet werden.

Die Erfindung betrifft auch die Verwendung der Kristallisationsvorrichtung zur Durchführung des "Sulzer-MWB"-Verfahrens.

Ausführungsbeispiele der Erfindung werden nun unter Bezugnahme auf die Zeichnung beschrieben. Es zeigt:

Fig. 1 eine schematische Darstellung einer Anlage zur Durchführung des bekannten Sulzer-MWB-Verfahrens,

Fig. 2 einen Ausschnitt aus einer Kristallisationsvorrichtung,

Fig. 3 bis 12 verschiedene Ausführungsformen der Einbauten im Querschnitt,

Fig. 13 verschiedene Ausführungsformen von perforiertem Material für die Einbauten,

Fig. 14a und b ein Ausführungsbeispiel eines Blechstreifens mit einer Riffelung als Oberflächenstrukturierung.

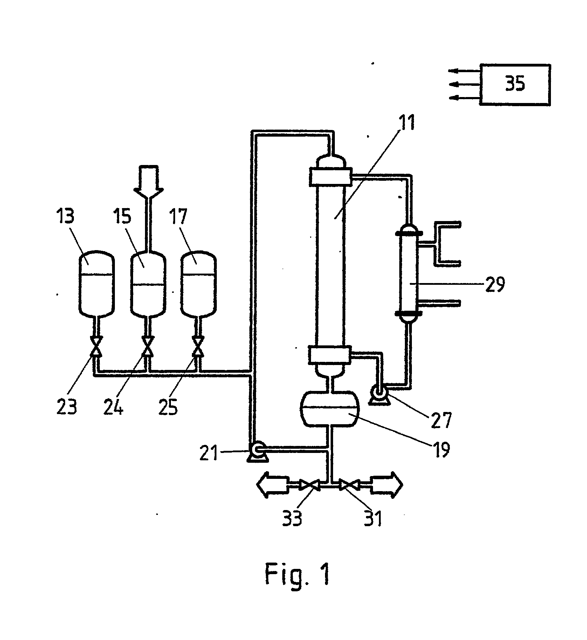

Bei der Anlage gemäss Figur 1 zur Durchführung des SulzerMWB-Kristallisationsverfahren bildet die Kristallisationsvorrichtung 11 den wesentlichsten Anlageteil. In den Tanks 13, 15, 17 werden die Fraktionen aus dem Sammeltank 19 zwischengelagert. Der Produktionskreislauf erfolgt über die Pumpe 21. Die Ventile 23 bis 25 dienen als Einlass oder Auslass der Tanks 13, 15 und 17. Kühl- oder Heizmittel werden der Kristallisationsvorrichtung 11 mittels der Pumpe 27 über den Wärmetauscher 29 zugeführt. Nach der Durchführung der verschiedenen Kristallisationszyklen kann das Kristallisat über das Ventil 31 und die Mutterlauge über das Ventil 33 abgelassen werden. Die Steuerung des Kristallisationsverfahrens erfolgt durch eine vollautomatische Steuerungseinrichtung 35. Eine detaillierte Beschreibung des Verfahrens findet sich in der CH-PS 501 421.

Die in Figur 1 nicht in Details dargestellte Kristallisationsvorrichtung 11 weist ein Rohrbündel auf, dessen Rohre mit einem Rieselfilm oder einer vollen Rohrströmung des zu behandelnden Flüssigkeitsgemisches beschickbar sind.

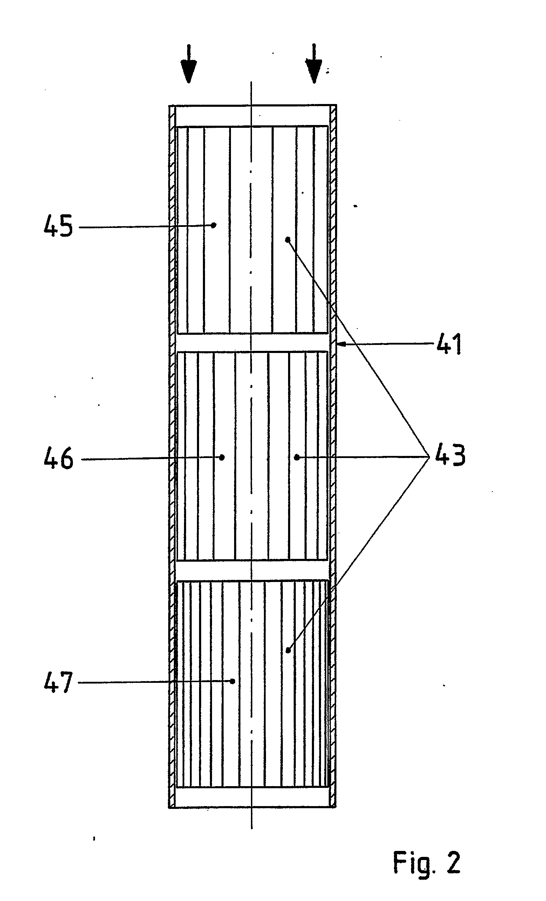

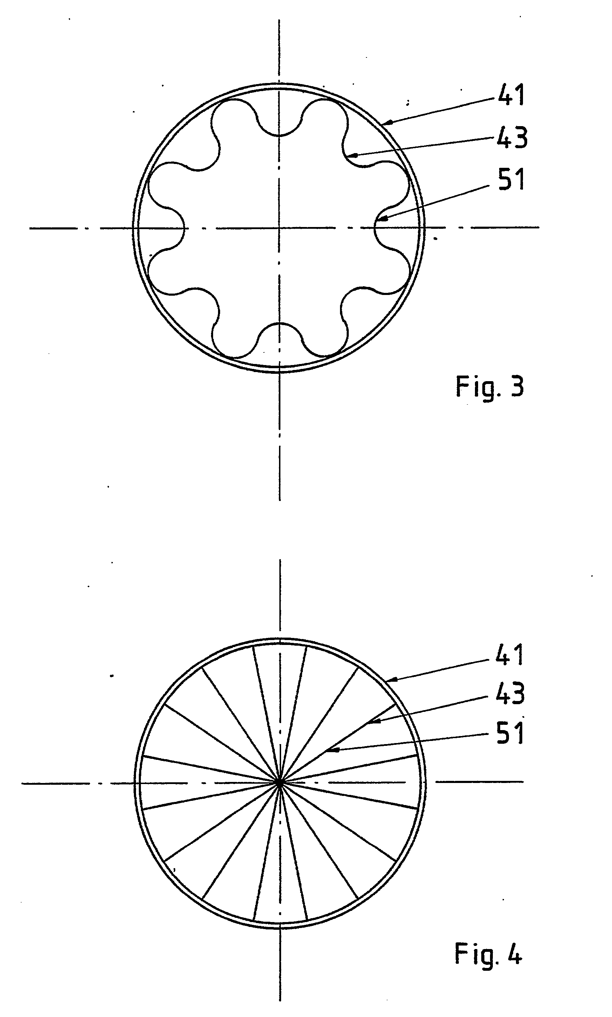

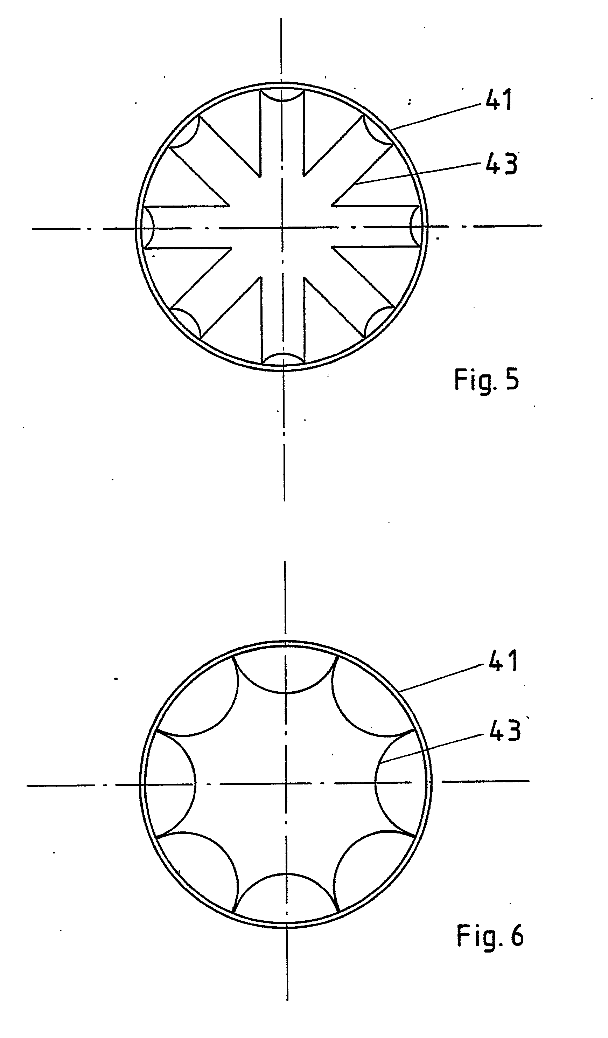

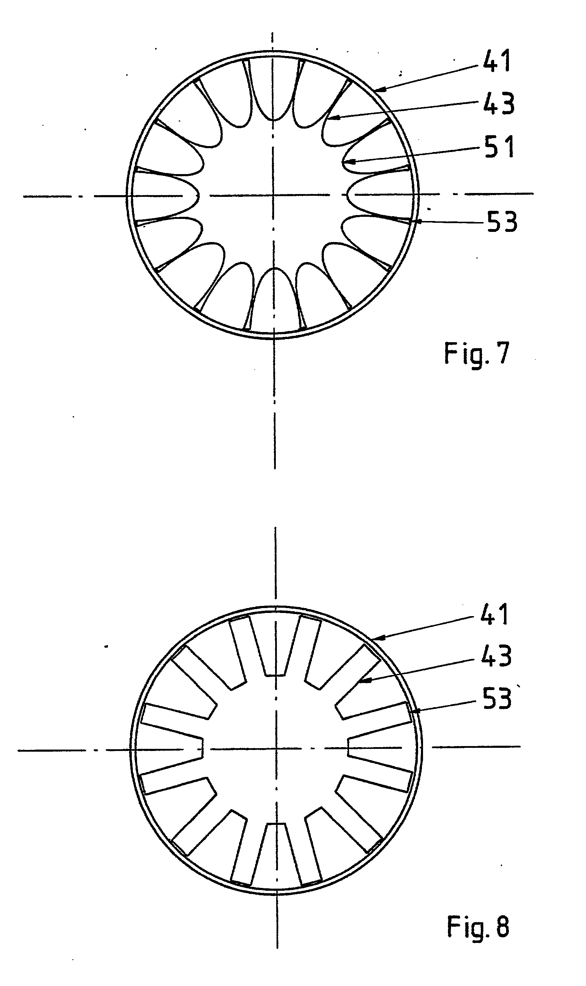

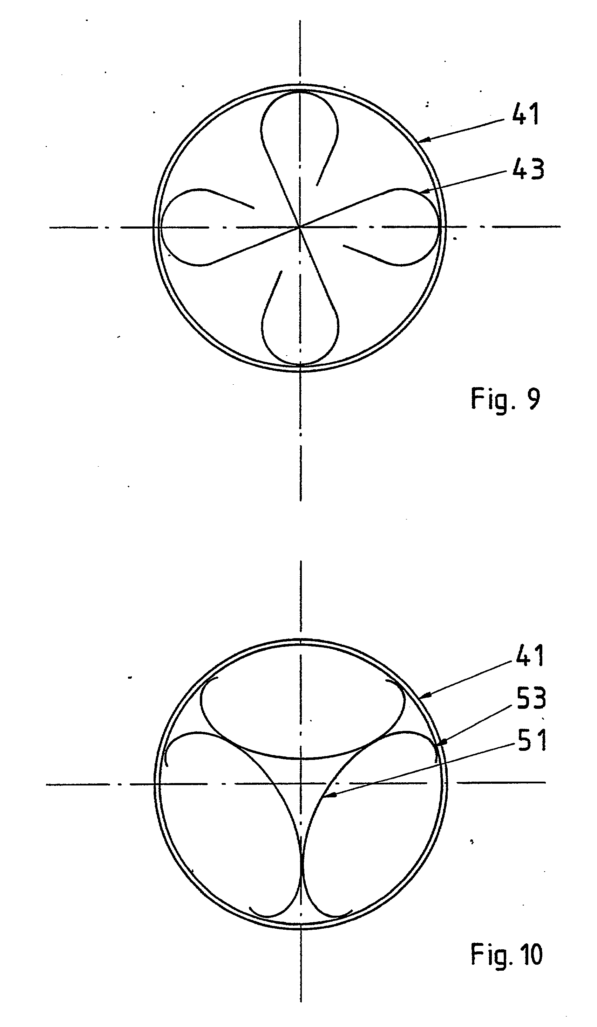

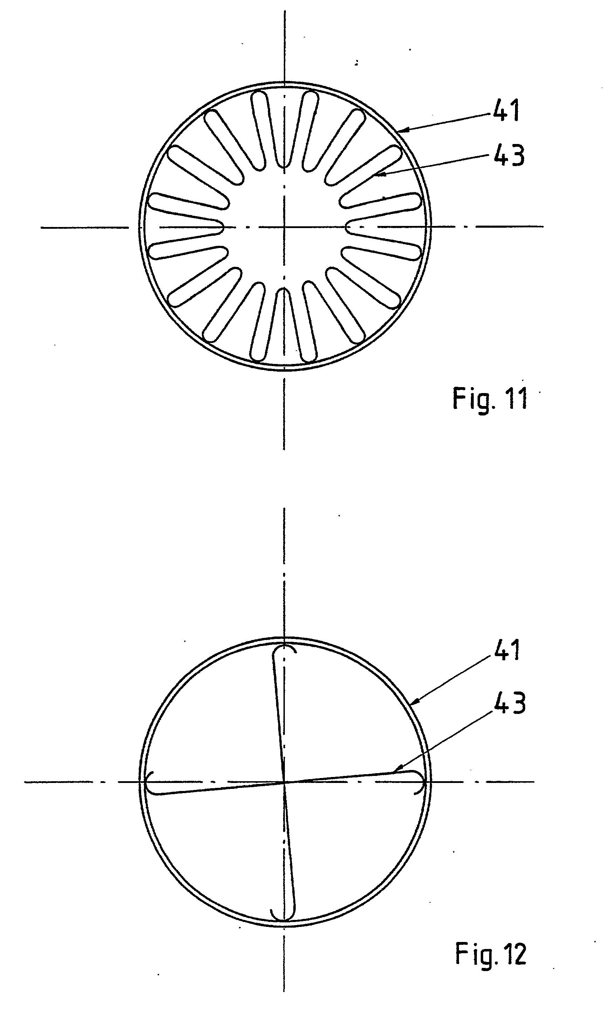

Wie Figur 2 zeigt, sieht die Erfindung im Gegensatz zum bekannten Stand der Technik vor, dass die Rohre 41 Einbauten 43 aufweisen, welche die wirksame Oberfläche im Innern des Rohres vergrössern. Bei dem in Figur 2 gezeigten Ausführungsbeispiel weisen die Einbauten 43 drei verschiedene Abschnitte 45, 46 und 47 auf. Der Abschnitt 46 hat eine grössere wirksame Oberfläche als der Abschnitt 45. Der Abschnitt 47 wiederum hat eine grössere wirksame Oberfläche als der Abschnitt 46. Die Einbauten können je nach dem zu behandelnden Flüssigkeitsgemisch verschiedene Ausgestaltungen haben, wie dies beispielsweise in den Figuren 3 bis 12 dargestellt wird. Wichtig ist dabei, dass die Einbauten von der Rohrwandung 41 her nach innen ragende Strukturelemente 51 aufweisen, welche für einen Wärmeübergang sorgen, auch wenn bereits eine relativ dicke Kristallschicht vorhanden ist. Es ist dabei von Vorteil, wenn die Einbauten 43 spezielle für den Wärmeübergang ausgebildete Kontaktflächen 53 aufweisen, welche an der Rohrwandung 41 anliegen. Die Einbauten können Perforationen 54 aufweisen.

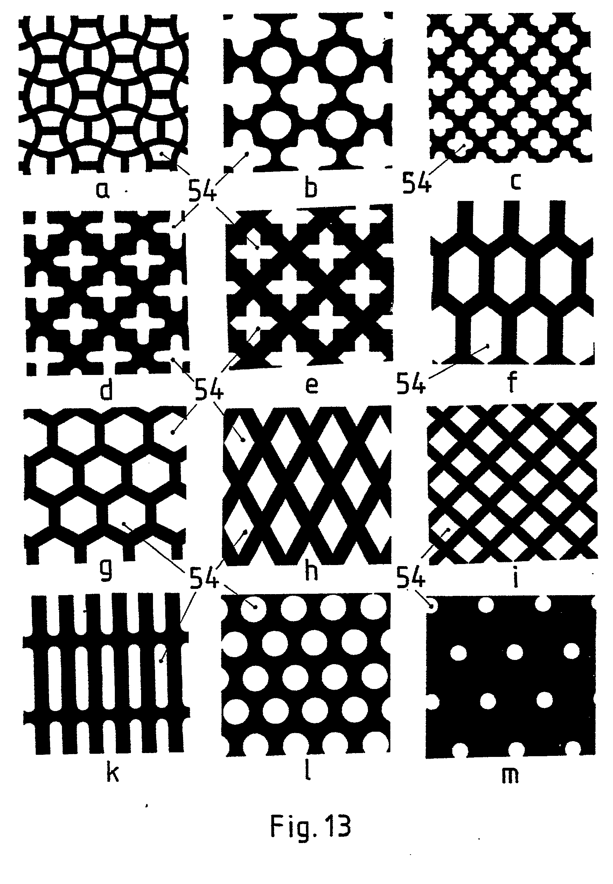

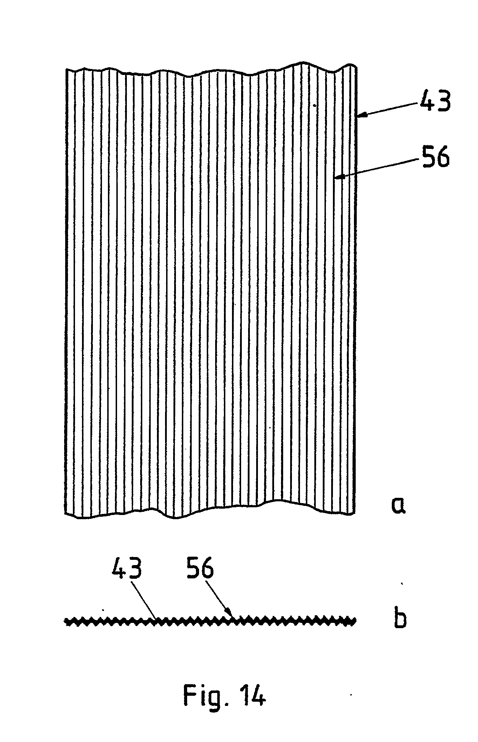

Die Figuren 13a bis m zeigen mögliche Ausführungsbeispiele für solche Perforationen 54. Statt Perforationen oder zusätzlich zu Perforationen kann auch eine Oberflächenstrukturierung, z.B. eine Riffelung 56, vorgesehen sein, wie dies in den Figuren 14a und b beispielsweise dargestellt wird.

Als Material für die Einbauten kommt in erster Linie Metallblech, z.B. rostfreier Stahl, in Frage. Wie die Figuren 3 bis 12 zeigen, kann das Metallblech auf verschiedene Weise gewellt oder gefaltet sein. Speziell gut eignet sich eine Wellung, wie sie in Figur 3 dargestellt ist.

Für die Behandlung von gewissen Flüssigkeitsgemischen, z.B. korrosiven Flüssigkeitsgemischen, können auch Einbauten aus einem nichtmetallischen Material, z.B. Graphit, Polyvinylchlorid, verwendet werden. Diese Einbauten sollten eine bessere Wärmeleitfähigkeit aufweisen als das Kristallisat.

**Patentansprüche**

1. Kristallisationsvorrichtung mit einem Rohrbündel, dessen Rohre (41) mit einem Rieselfilm oder einer vollen Rohrströmung des zu behandelnden Flüssigkeitsgemisches beschickbar sind, wobei sich bei der Kristallisation ein an der Rohrwandung haftendes Kristallisat bildet, dadurch gekennzeichnet, dass mindestens eine Einbaute (43) vorgesehen ist, die in wärmeleitendem Kontakt mit der Rohrwandung steht und die die wirksame Oberfläche im Innern des Rohres (41) vergrössert, und dass die wirksame Oberfläche der Einbaute entsprechend dem zu behandelnden Flüssigkeitsgemisch in Flussrichtung zunimmt.

2. Kristallisationsvorrichtung nach Anspruch 1, dadurch gekennzeichnet, dass im Rohr (41) nacheinander verschiedene Abschnitte (45, 46, 47) vorgesehen sind, und dass in Flussrichtung gesehen die wirksame Oberfläche pro Längeneinheit des nachfolgenden Abschnitts (46, 47) grösser ist als die wirksame Oberfläche des vorangehenden Abschnitts (45, 46).

3. Kristallisationsvorrichtung nach Anspruch 1 oder 2, dadurch gekennzeichnet, dass die Einbauten (43) von der Rohrwandung (41) her nach innen ragende Strukturelemente (51) aufweisen.

4. Kristallisationsvorrichtung nach einem der Ansprüche 1 bis 4, dadurch gekennzeichnet, dass die Einbauten (43) im Bereich der Rohrwandung (41) für den Wärmeübergang ausgebildete Kontaktflächen (53) aufweisen.

5. Kristallisationsvorrichtung nach einem der Ansprüche 1 bis 4, dadurch gekennzeichnet, dass die Einbauten (43) Perforationen (54) aufweisen.

6. Kristallisationsvorrichtung nach einem der Ansprüche 1 bis 5, dadurch gekennzeichnet, dass die Einbauten (43) eine Oberflächenstrukturierung, z.B. eine Riffelung (56) aufweisen.

7. Kristallisationsvorrichtung nach einem der Ansprüche 1 bis 6, dadurch gekennzeichnet, dass die Einbauten (43) aus Metallblech bestehen.

8. Kristallisationsvorrichtung nach einem der Ansprüche 1 bis 7, dadurch gekennzeichnet, dass die Einbauten (43) aus mehrfach gefaltetem Metallblech bestehen.

9. Kristallisationsvorrichtung nach einem der Ansprüche 1 bis 8, dadurch gekennzeichnet, dass die Einbauten (43) aus nichtmetallischem Material, z.B. Graphit, Polyvinylchlorid, bestehen.

10. Verwendung der Kristallisationsvorrichtung nach einem der Ansprüche 1 bis 9 zur Durchführung des Sulzer-MWB-Verfahrens.

## Claims

1. Crystallisation apparatus comprising a pipe assembly with a bundle of pipes in which the liquid can flow as a falling film or as a full pipe flow, a crystallization product adhering to the pipe wall being formed during the crystallization, characterized in that at least one insert (43) is provided which is in thermally conducting contact with the tube wall, and in that, in accordance with the liquid mixture to be treated, the effective surface of the inserts increases in direction of liquid flow.

2. Crystallisation apparatus as in claim 1, characterized in that in the tubes (41) different insert sections (45, 46, 47) are provided, and in that, in direction of liquid flow, the effective surface of the subsequent insert section (46, 47) is larger per unit of length than the effective surface of the preceding insert section (45, 46).

3. Crystallisation apparatus as in claim 1 or 2 characterized in that the inserts (43) comprise structural elements (51) extending from the tube walls (41) to the interior.

4. Crystallisation apparatus as in one of the claims 1 to 3, characterized in that the inserts (43) comprise contact surfaces (53) in the region of the tube walls for permitting heat transfer.

5. Crystallisation apparatus as in one of the claims 1 to 4, characterized in that the inserts (43) comprise perforations (54).

6. Crystallisation apparatus as in one of the claims 1 to 5, characterized in that the inserts (43) comprise a surface structure, e.g. a corrugation.

7. Crystallisation apparatus as in one of the claims 1 to 6, characterized in that the inserts (43) consist of sheet metal.

8. Crystallisation apparatus as in one of the claims 1 to 7, characterized in that the inserts (43) consist of multiple folded sheet metal.

9. Crystallisation apparatus as in one of the claims 1 to 8, characterized in that the inserts (43) consist of a nonmetallic material, e.g. graphite, polyvinylchloride.

10. Use of the crystallisation apparatus according to one of the claims 1 to 9 to carry out the Sulzer-MWB method.

## Revendications

1. Dispositif de cristallisation, comprenant un faisceau de tubes dont les tubes (41) peuvent être alimentés avec un film ruisselant ou un courant tubulaire complet du mélange de liquides à traiter, un produit de cristallisation qui adhère à la paroi des tubes se formant lors de la cristallisation, caractérisé en ce qu'il est prévu au moins un insert (43) qui est en contact thermoconducteur avec la paroi du tube et qui augmente la surface utile à l'intérieur du tube (41), et en ce que la surface utile de l'insert croît dans le sens de l'écoulement de façon correspondante au mélange de liquides à traiter.

2. Dispositif de cristallisation selon la revendication 1, caractérisé en ce que des segments différents (45, 46, 47) sont prévus à la suite l'un de l'autre dans le tube (41), et en ce qu'en considérant le sens de l'écoulement, la surface active par unité de longueur d'un segment aval (46, 47) est plus grande que la surface active d'un segment amont (45, 46).

3. Dispositif de cristallisation selon la revendication 1 ou 2, caractérisé en ce que les inserts (43) comportent des éléments structurels (51) qui font saillie vers l'intérieur à partir de la paroi du tube (41).

4. Dispositif de cristallisation selon l'une quelconque des revendications 1 à 3, caractérisé en ce que les inserts présentent, dans la région de la paroi du tube (41), des surfaces de contact (53) réalisées en vue de la transmission de chaleur.

5. Dispositif de cristallisation selon l'une quelconque des revendications 1 à 4, caractérisé en ce que les inserts (43) présentent des perforations (54).

6. Dispositif de cristallisation selon l'une quelconque des revendications 1 à 5, caractérisé en ce que les inserts (43) présentent une surface profilée, par exemple sous forme de stries (56).

7. Dispositif de cristallisation selon l'une quelconque des revendications 1 à 6, caractérisé en ce que les inserts (43) sont en tôle métallique.

8. Dispositif de cristallisation selon l'une quelconque des revendications 1 à 7, caractérisé en ce que les inserts (43) sont faits de tôle métallique pliée plusieurs fois.

9. Dispositif de cristallisation selon l'une quelconque des revendications 1 à 8, caractérisé en ce que les inserts (43) sont faits d'un matériau non métallique, par exemple de graphite ou de chlorure de polyvinyle.

10. Utilisation du dispositif de cristallisation selon l'une quelconque des revendications 1 à 9 pour l'exécution du procédé Sulzer-MWB.

Fig. 1

45

41

46        43

47

Fig. 2

41
43
51

Fig. 3

41
43
51

Fig. 4

41

43

Fig. 5

41

43

Fig. 6

Fig. 7

Fig. 8

Fig. 9

Fig. 10

Fig. 11

Fig. 12

Fig. 13

43

56

a

43    56

b

Fig. 14